# FASCICULE DE BREVET EUROPEEN

(11) **EP 1 581 845 B1**
(45) Date de publication et mention de la délivrance du brevet: **07.01.2009**
(21) Numéro de dépôt: 03767885.1
(22) Date de dépôt: 04.11.2003
(51) Int. Cl.: G05G 1/04, G05G 7/04, B60K 20/00, B60K 23/00, F16H 61/22, G05G 5/28, G05G 5/00, G05G 7/02, F16C 1/12, G05G 5/06

(54) **MECANISME DE COMMANDE D' UN ORGANE DISTANT HYDRAULIQUE, COMPRENANT DES MOYENS DE LIMITATION DE COURSE D' UNE MANETTE DE COMMANDE ACTIONNABLE PAR L' OPERATEUR.**
HYDRAULISCHE STEUEREINRICHTUNG EINES FERNGERÄTS MIT MITTELN ZUR BEGRENZUNG DES FAHRWEGES EINES VON EINEM BEDIENER BETÄTIGBAREN SCHALTKNÜPPELS
MECHANISM FOR CONTROLLING A REMOTE HYDRAULIC MEMBER, COMPRISING MEANS FOR LIMITING THE TRAVEL OF AN OPERATOR-ACTUATED CONTROL HAND LEVER

(30) Priorité: 24.11.2002 FR 0215872
(43) Date de publication de la demande: 05.10.2005
(73) Titulaire: Bignon, Daniel-Pierre André Paul, 94800 Villejuif (FR)
(72) Inventeur: Bignon, Daniel-Pierre André Paul, 94800 Villejuif (FR)
(74) Mandataire: Jeannet, Olivier
(86) Numéro de dépôt international: PCT/FR2003/003273
(87) Numéro de publication internationale: WO 2004/049090

(56) Documents cités:
- EP-A- 0 285 299
- EP-A- 0 519 811
- US-A- 4 116 086
- US-A- 5 446 982

## Description

La présente invention est du domaine des dispositifs de commande d'un organe distant. Elle a pour objet un mécanisme à commande continue pour la manoeuvre d'un tel organe distant, distributeur hydraulique notamment, plus particulièrement applicable aux engins du génie civil ou analogues. Un tel mécanisme est connu du US 4 116 086 X qui forme une base pour le préambule de la revendication 1.

On connaît des mécanismes de commande à distance utilisant dans leur généralité un câble, ou analogue tel qu'une tringle, pour transmettre une commande continue depuis une manette actionnable par l'opérateur, vers un organe distant principal à mettre en oeuvre, distributeur hydraulique notamment. Ces mécanismes sont notamment appliqués aux engins du génie civil, forestiers, agricoles ou analogues.

De manière courante, la manette est articulée en pivotement sur un boîtier entre deux positions extrêmes, par l'intermédiaire d'un axe de pivotement auquel elle est solidarisée au moyen d'une platine. Le câble est ancré sur la platine en vue de sa manoeuvre par cette dernière. On notera à ce stade de la description qu'il est connu d'ancrer le câble sur la platine en un point d'ancrage préalablement sélectionné parmi un jeu de points d'ancrage, qui est choisi selon l'orientation du câble par rapport à l'orientation générale de la manette. L'ensemble dynamique de manoeuvre du câble participant du mécanisme comprend donc principalement la manette, la platine et l'axe de pivotement. On notera qu'il est courant d'équiper cet ensemble de manoeuvre du câble de moyens de rappel en sa position extrême initiale, qui correspond à une position neutre dans laquelle aucune commande n'est transmise à l'organe distant.

En outre, de tels mécanismes sont aussi organisés pour actionner un interrupteur en relation avec la manoeuvre du câble. Cet interrupteur permet de commander la mise en oeuvre d'un organe distant secondaire, en correspondance avec la manoeuvre d'un organe distant.

Un problème posé réside dans une utilisation sécurisée de tels mécanismes de commande. Plus particulièrement, il est courant que plusieurs mécanismes soient placés côte à côte pour la commande respective d'une pluralité d'organes distants.

Cette disposition en adjacence de plusieurs mécanismes est susceptible d'être une source d'erreur pour l'opérateur quant au choix de la manette à utiliser pour la commande de l'organe distant correspondant qu'il souhaite mettre en oeuvre. Or, il est des commandes qui peuvent être dangereuses, notamment dans le cas où une position extrême de manoeuvre de la manette correspond à une position de l'organe distant susceptible de porter à conséquence. Il en découle qu'une erreur de l'opérateur quant au choix de la manette qu'il utilise est susceptible de porter atteinte à la sécurité, l'organe distant commandé en correspondance pouvant alors prendre une position inappropriée, voire dangereuse donc source d'insécurité.

Ce problème est rendu d'autant plus délicat dans le cas où une manoeuvre de la manette est associée à la manoeuvre d'un interrupteur, dont les effets en tout ou rien constituent une source d'insécurité inattendue en cas d'erreur de manipulation d'une manette. On relèvera en outre que ce fonctionnement en tout ou rien de l'interrupteur, voire de manière analogue d'un commutateur à plusieurs positions, est réducteur quant aux possibilités offertes pour la manoeuvre d'un organe secondaire distant.

Par ailleurs, il a été proposé plus particulièrement dans le domaine, des mécanismes de commande dans lesquels l'orientation du câble peut être sélectionnée entre deux positions concourantes. Ces dispositions visent à autoriser une modification de l'orientation du câble alternativement entre des positions sensiblement orthogonale à, ou en prolongement de, l'orientation de la manette. A cet effet, un canon de guidage du câble est fixé sur le boîtier de manière à être disposé suivant deux positions réversibles. Corrélativement, le câble est fixable à la platine suivant des points d'ancrage alternatifs correspondant respectivement à l'une et à l'autre des positions du canon sur le boîtier et des orientations correspondantes du câble. On pourra notamment se reporter au document EP0519811 (T.M.C.) qui décrit de telles dispositions.

Le but principal de la présente invention est de proposer un mécanisme à commande continue pour la manoeuvre d'au moins un organe distant, dont l'organisation permette de sécuriser la mise en oeuvre de cet organe distant.

Un but secondaire de la présente invention est de proposer un tel mécanisme de commande, qui offre une adaptabilité de fonctionnement permettant d'optimiser les possibilités de son utilisation à des cas d'implantation néanmoins spécifiques.

Le mécanisme de commande proposé par la présente invention, comprend au moins un organe de commande pour transmettre une commande depuis une manette actionnable par l'opérateur, vers un organe distant principal. Un tel mécanisme comprend un ensemble de manoeuvre de l'organe de commande, qui est monté pivotant sur un boîtier entre deux positions extrêmes. Cet ensemble de manoeuvre est au moins composé de la manette, qui est articulée en pivotement sur le boîtier par l'intermédiaire d'un axe de pivotement.

On relèvera à ce stade de la description que selon une variante de réalisation selon laquelle l'organe de commande est un câble, la manette est solidaire de l'axe de pivotement par l'intermédiaire d'une platine comportant au moins un organe d'ancrage pour la fixation du câble en vue de sa manoeuvre, cette platine étant alors participante de l'ensemble de manoeuvre.

Selon la présente invention, un tel mécanisme de commande est principalement reconnaissable en ce que l'ensemble de manoeuvre est équipé de moyens de limitation de sa course entre ses deux positions extrêmes. Ces moyens de limitation de course comprennent au moins un organe de butée à l'encontre du pivotement de l'ensemble de manoeuvre, et des moyens de sélection extemporanée par l'opérateur entre une position active de cet organe de butée, dans laquelle la course en pivotement de l'ensemble de manoeuvre est limitée, et une position escamotée, dans laquelle l'ensemble de manoeuvre est actionnable par l'opérateur entre ses deux positions extrêmes.

On relèvera que selon une variante relevant de la règle générale de l'invention énoncée, les organes de butée peuvent être en pluralité, auxquels sont affectées des positions intermédiaires respectives de l'ensemble de manoeuvre.

Ces dispositions sont telles que lors de l'utilisation du mécanisme de commande, l'opérateur peut interdire un dépassement d'une limite de course de l'ensemble de manoeuvre, qu'il choisit extemporanément selon l'activité en cours et/ou selon le ou les organes de puissance dont il est susceptible de commander la mise en oeuvre par l'intermédiaire d'une pluralité de boîtiers de commande qui leurs sont respectivement affectés.

On comprendra que les moyens de sélection sont indifféremment des moyens de sélection continue, tels qu'une rampe d'appui de l'organe de butée, et/ou des moyens de modification discrète des positions de l'organe de butée.

Selon une forme préférée de réalisation, il est choisi d'utiliser la manette comme organe intermédiaire de limitation de course de l'ensemble de manoeuvre. On comprendra en cela que les moyens de limitation de course de l'ensemble de manoeuvre sont de préférence des moyens de limitation de course à l'encontre du pivotement de la manette.

Les moyens de limitation de course de la manette comprenant des moyens de sélection discrète des positions de l'organe de butée, ce dernier est par exemple ménagé en bordure d'un couloir à travers lequel circule la manette en pivotement. Plus particulièrement, ce couloir est bordé sur au moins l'un de ses côtés d'organes de crantage correspondant à des organes de mise en butée de la manette respectivement en ses positions extrêmes et en au moins une position intermédiaire de limitation de course. On comprendra que la pluralité de ces organes de crantage participe à l'agencement discret des moyens de sélection, qui comprennent aussi des moyens d'introduction de la manette dans l'un quelconque des organes de crantage bordant le couloir.

Selon une forme préférée de réalisation des moyens de limitation de course de la manette, le couloir et les organes de crantage le bordant sont ménagés le long d'un organe de limitation de course de la manette qui est agencé en barillet. Les moyens d'introduction de la manette dans l'un quelconque des organes de crantage bordant le couloir sont constitués par un montage tournant du barillet sur le boîtier, par l'intermédiaire de ses extrémités notamment.

Ce montage tournant du barillet est de préférence associé à des moyens de durcissement élastique de son mouvement tournant, pour son immobilisation spontanée en une position angulaire désirée par l'opérateur. Ces moyens d'immobilisation élastique sont par exemple constitués par un ressort à languette prenant appui dans un crantage du barillet ménagé à l'une de ses extrémités.

Cet agencement du mécanisme de l'invention permet d'autoriser alternativement, soit une circulation de la manette à travers le couloir du barillet, soit un blocage en pivotement de la manette à l'intérieur de l'un quelconque des organes de crantage qui le bordent.

Selon une première variante de réalisation, il est proposé d'utiliser un câble comme organe de manoeuvre. Ce câble est préférentiellement guidé en sortie du boîtier à l'intérieur d'un canon à double positions réversibles. La platine comporte au moins deux points d'ancrage du câble en relation avec une position correspondante du canon. Ces points d'ancrage sont situés en des emplacements respectifs de la platine sensiblement en opposition diamétrale par rapport à l'axe de pivotement de l'ensemble de manoeuvre. Ces dispositions sont telles qu'un pivotement de l'ensemble de manoeuvre suivant une même direction provoque une manoeuvre du câble suivant des directions alternatives inverses, en fonction de la position du canon et du point d'ancrage correspondant préalablement sélectionnés.

Il en découle que l'opérateur peut choisir le sens de manoeuvre active du câble, avec comme avantage la possibilité d'interdire un effet indésirable en cas d'une manoeuvre involontaire ou inopinée de la manette. Il est notamment visé par ces dispositions d'alterner de l'un à l'autre de deux mécanismes adjacents le sens de manoeuvre du câble, pour éviter tout risque d'erreur par l'opérateur.

Le canon de guidage du câble est par exemple ménagé sur un support comprenant un couple d'ailes orientées de manière symétrique vers l'intérieur du boîtier, pour un emboîtement frontal du canon de guidage contre des parois de chant du boîtier.

On comprendra que cet agencement symétrique des ailes d'emboîtement est tel que chaque aile est apte à coopérer avec l'une quelconque des parois correspondantes du boîtier, pour autoriser la réversibilité des positions du canon.

Une languette d'étanchéité est avantageusement solidaire de la manette à sa base, cette languette étant incurvée en correspondance avec le débattement de pivot de la manette et avec l'orientation des ailes du support du canon, pour circuler en coulissement glissant le long de l'aile d'emboîtement frontal correspondante du canon de guidage sur le boîtier.

Selon une deuxième variante de réalisation, il est proposé d'utiliser au moins un potentiomètre comme organe de manoeuvre, en substitution ou en complément du câble. On comprendra que dans le cas d'une utilisation du mécanisme de l'invention conjointement avec des organes de manoeuvre respectivement constitués du câble et du potentiomètre, ceux-ci sont en relation avec un organe distant respectif à manoeuvrer.

L'une au moins des extrémités de l'axe de pivotement participant de l'ensemble de manoeuvre est préférentiellement accessible depuis l'extérieur du boîtier. Cette accessibilité est par exemple obtenue à travers une fenêtre ou analogue que comporte le boîtier, voire par une émergence de l'axe de pivotement hors de celui-ci à travers une telle fenêtre, ou encore par simple affleurement du bout de l'axe de pivot et de la face extérieure correspondante du boîtier. L'axe de pivotement est pourvu de moyens d'assujettissement en rotation d'un potentiomètre fixé sur la face extérieure correspondante du boîtier, pour permettre, à partir du mouvement tournant de l'axe de pivotement, une manoeuvre à commande continue d'au moins un organe distant secondaire.

L'ensemble de manoeuvre est notamment équipé de moyens de rappel en sa position extrême initiale à l'encontre de sa manoeuvre par l'opérateur. Ces moyens de rappel sont avantageusement constitués par un ressort à spirale, qui prend appui à ses extrémités respectivement contre un becquet de la platine et contre le boîtier.

La présente invention sera mieux comprise, et des détails en relevant apparaîtront, à la description qui va en être faite en relation avec les figures des planches annexées, dans lesquelles :
Les fig.1 et fig.2 sont des vues en perspective partiellement éclatée d'un mécanisme de commande selon une forme préférée de réalisation de l'invention, ce mécanisme étant respectivement illustré sur ces figures selon deux configurations respectives de fonctionnement, et étant équipé d'un organe de manoeuvre d'un organe distant constitué d'un câble.
La fig.3 est une illustration en perspective du mécanisme représenté sur les figures précédentes, dans lequel l'organe de manoeuvre de l'organe distant est constitué d'un potentiomètre.

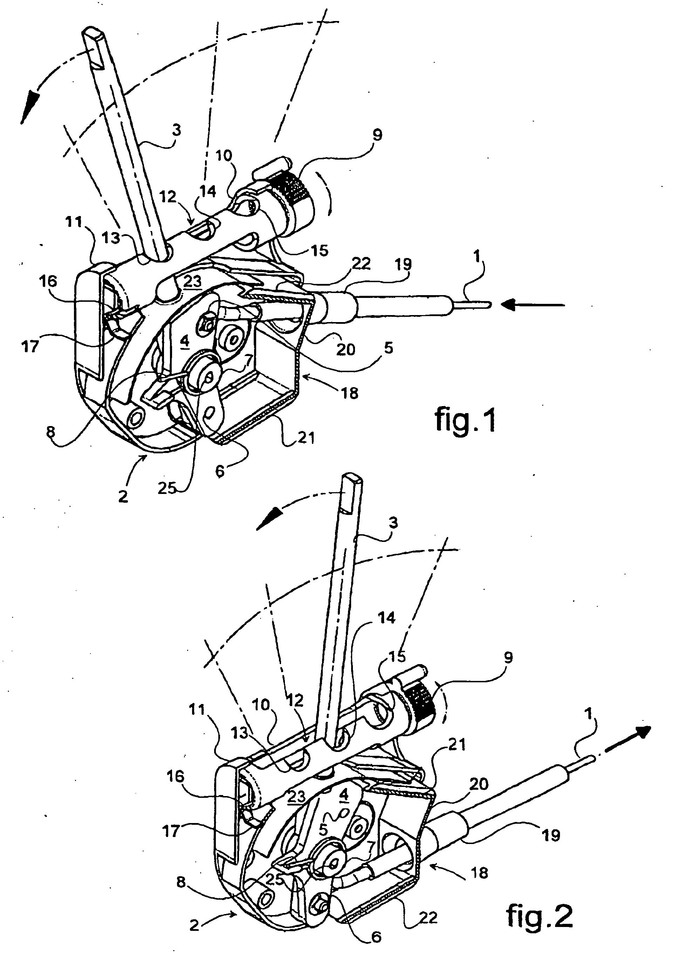

Sur les fig.1 et fig.2, un mécanisme de commande par câble 1 comprend principalement un boîtier 2 supportant en pivotement un ensemble de manoeuvre du câble 1. Cet ensemble de manoeuvre comprend une manette 3 actionnable par l'opérateur, qui émerge hors du boîtier 2 à son sommet. Cette manette 3 est solidaire d'une platine 4, sur laquelle est ancré le câble 1. On remarquera à ce stade de la description que la platine 4 comporte deux points 5 et 6 d'ancrage du câble 1, à usage alternatif. La platine 4 est solidaire d'un axe de pivotement 7 supporté en rotation par le boîtier 2.

Un ressort de rappel 8 en spirale manoeuvre spontanément l'ensemble de manoeuvre 3,4,7 en position neutre, à l'encontre d'une poussée exercée sur la manette 3 par l'opérateur en vue de commander la manoeuvre de l'organe distant.

La manette 3 est manoeuvrable entre deux positions extrêmes, dont l'une correspond à la position neutre susvisée et dont l'autre correspond à une fin de course de l'ensemble de manoeuvre 3,4,7. Un barillet 9 est supporté par le boîtier 2 de manière tournante par ses extrémités. On remarquera que le boîtier 2 comporte une fenêtre 10 ménagée à travers sa paroi de chant supérieure 11, pour permettre un accès à la zone médiane du barillet 9, hors duquel émerge la manette 3 qui le traverse.

Ce barillet 9 comporte un couloir longitudinal 12 bordé par des organes de crantage 13,14 et 15, qui constituent chacun un organe de butée visant à immobiliser la manette 3 en une position spécifique. Cette immobilisation de la manette est plus particulièrement une immobilisation de l'ensemble de manoeuvre 3,4,7, non seulement en positions extrêmes mais aussi en une position d'immobilisation intermédiaire de sécurité. Ces dispositions visent à permettre à l'opérateur de limiter extemporanément la course de la manette 3, pour éviter toute mauvaise manoeuvre susceptible d'être une source d'insécurité.

Le barillet 9 est pourvu à l'une de ses extrémités d'un dispositif de crantage 16 coopérant avec un organe élastique, tel qu'un ressort à lamelle 17, pour durcir son mouvement tournant.

Le câble 1 émerge hors du boîtier 2 à travers l'une de ses parois de chant 18 par l'intermédiaire d'un canon 19. En se reportant de l'une à l'autre des figures, le canon 19 est à position réversible, pour provoquer une manoeuvre active du câble 1 de commande de l'organe distant, soit à partir d'une rentrée vers l'intérieur du boîtier 2, tel qu'illustré sur la fig.1, soit à partir d'une sortie hors du boîtier 2, tel qu'illustré sur la fig.2. Pour cela, le canon 19 est supporté par le boîtier 2 par l'intermédiaire d'un support 20 formant la paroi de chant correspondante 18 du boîtier. Ce support comprend un couple d'ailes 21 et 22 qui sont orientées de manière sensiblement symétrique vers l'intérieur du boîtier 2.

L'emboîtement du support 20 du canon 19 est effectué frontalement contre des parois de chant correspondantes du boîtier 2. Le câble 1 est fixable sur la platine 4 de commande sur les points d'ancrage 5 et 6, qui sont diamétralement opposés par rapport à l'axe de pivotement 7. Le point d'ancrage 5 ou 6 du câble 1 et la position correspondante du canon 19, sont alternativement préalablement sélectionnés, selon la direction souhaitée de manoeuvre active du câble 1.

On remarquera la présence d'une languette d'étanchéité 23 incurvée, qui est solidaire de la manette 3 à sa base.

Cette languette 23, montée coulissante sur le boîtier 2 en relation avec le pivotement de la manette 3 de laquelle elle est solidaire, circule entre l'aile 21 du support 20 du canon 19 et la paroi correspondante de chant du boîtier 2. On remarquera à ce propos l'agencement avantageux des inclinaisons sensiblement parallèles des ailes 21 ou 22 du support 20 et de la paroi correspondante du boîtier 2, par rapport à l'axe général d'extension de la manette 3 et en relation avec l'angle de débattement de cette dernière 3, pour permettre un tel coulissement de la languette d'étanchéité 23.

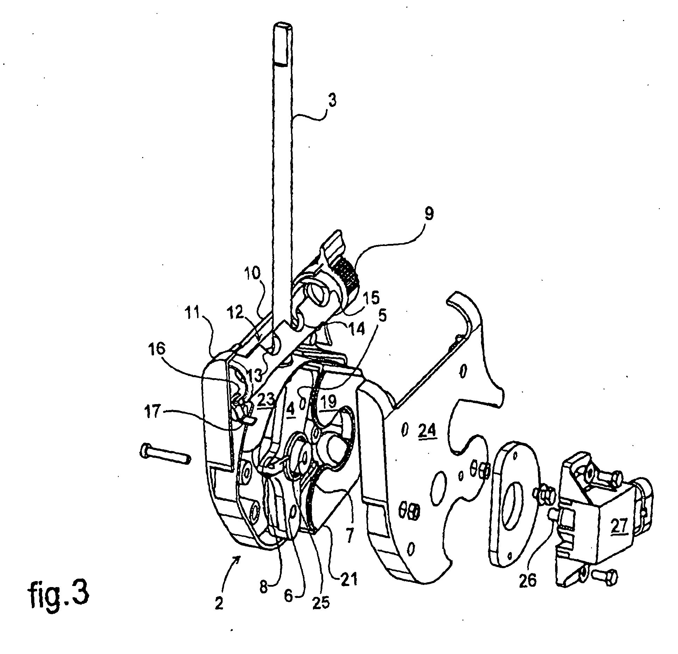

En se reportant par ailleurs à la fig.3, l'axe de pivotement 7 de l'ensemble de manoeuvre 3,4,7 affleure la face extérieure d'une paroi latérale 24 du boîtier 2, et comporte un évidemment 25 d'une section de conformation à absence de révolution. Cette conformation est par exemple une conformation du profil de l'évidemment 25 en méplat, ou analogue tel que carré d'entraînement. Cet évidemment 25 est destiné à coopérer avec un doigt de manoeuvre 26 d'un potentiomètre 27, qui est fixé sur la face extérieure de la paroi correspondante 24 du boîtier 2.

Ce potentiomètre 27, sur l'exemple d'application illustrée sur la fig.3 du mécanisme représenté sur l'ensemble des figures, est utilisé en substitution du câble 1 pour manoeuvrer l'organe distant. On comprendra cependant, et selon une application avantageuse du mécanisme à la manoeuvre d'une pluralité d'organes distants, qu'un couple d'organes distants est susceptible d'être manoeuvrés en correspondance, ces organes distants étant respectivement en relation avec le câble 1 et le potentiomètre 27.

## Revendications

1. Mécanisme de commande continue pour la manoeuvre d'au moins un organe distant, du genre de mécanisme comprenant au moins un organe de manoeuvre (1, 27) pour transmettre une commande depuis une manette (3) vers un organe distant, ce mécanisme comprenant un ensemble de manoeuvre monté pivotant sur un boîtier (2) entre deux positions extrêmes, cet ensemble de manoeuvre étant au moins composé de la manette (3) articulée en pivotement sur le boîtier (2) par l'intermédiaire d'un axe de pivotement (7) auquel elle est solidarisée, l'organe de manoeuvre étant un câble (1), la manette (3) étant solidarisée à l'axe de pivotement (7) par l'intermédiaire d'une platine (4) qui comporte deux points d'ancrage (5, 6) pour la fixation du câble (1) ; **caractérisé en ce que** :
le câble (1) est guidé en sortie du boîtier (2) à l'intérieur d'un canon (19) à double positions réversibles et **en ce que** les deux points d'ancrage (5, 6) du câble (1) que comporte la platine (4) sont disposés en relation avec une position correspondante du canon (19), ces points d'ancrage (5, 6) étant situés en des emplacements respectifs de la platine (4) sensiblement en opposition diamétrale par rapport à l'axe de pivotement (7) de l'ensemble de manoeuvre (3, 4, 7), pour provoquer, à partir d'un pivotement de l'ensemble de manoeuvre (3, 4, 7) suivant une même direction, une manoeuvre du câble (1) suivant des directions alternatives inverses.

2. Mécanisme de commande selon la revendication 1, **caractérisé en ce que** le canon (19) de guidage du câble est ménagé sur un support (20) comprenant un couple d'ailes (21, 22) orientées de manière symétrique vers l'intérieur du boîtier (2) pour un emboîtement frontal du canon (19) contre des parois de chant du boîtier (2).

3. Mécanisme de commande selon l'une quelconque des revendications précédentes, **caractérisé en ce qu'**une languette d'étanchéité (23) solidaire de la manette (3) à sa base circule en coulissement glissant le long de l'aile d'emboîtement (21, 22) correspondante du canon (19) sur le boîtier (2).

4. Mécanisme de commande selon la revendication 2 ou la revendication 3, **caractérisé en ce que** le support (20) forme la paroi de chant correspondante (18) du boîtier (2).

5. Mécanisme de commande selon l'une des revendications 1 à 4, **caractérisé en ce que** l'ensemble de manoeuvre (3, 4, 7) est équipé de moyens de limitation de sa course entre ses deux positions extrêmes, ces moyens comprenant au moins un organe de butée (13, 14, 15) à l'encontre du pivotement de l'ensemble de manoeuvre (3, 4, 7) et des moyens (9, 16, 17) de sélection extemporanée par l'opérateur entre une position active de cet organe de butée (13, 14, 15), dans laquelle la course en pivotement de l'ensemble de manoeuvre (3, 4, 7) est limitée, et une position escamotée, dans laquelle l'ensemble de manoeuvre (3, 4, 7) est actionnable par l'opérateur entre ses deux positions extrêmes.

6. Mécanisme de commande selon la revendication 5, **caractérisé en ce que** les moyens de sélection sont indifféremment des moyens de sélection continue et des moyens de modification discrète des positions de l'organe de butée (13, 14, 15).

7. Mécanisme de commande selon la revendication 5 ou la revendication 6, **caractérisé en ce que** les moyens de limitation de course de l'ensemble de manoeuvre sont des moyens de limitation de course à l'encontre du pivotement de la manette (3).

8. Mécanisme de commande selon la revendication 7, **caractérisé en ce que** l'organe de butée (13, 14, 15) participant des moyens de limitation de course de l'ensemble de manoeuvre (13, 14, 15) comprend un couloir (12) à travers lequel circule la manette (3) en pivotement, ce couloir (12) étant bordé sur au moins l'un de ses côtés d'organes de crantage (13,14, 15) pour une mise en butée de la manette (3) respectivement en ses positions extrêmes et en au moins une position intermédiaire de limitation de course, les moyens de sélection comprenant des moyens (9) d'introduction de la manette (3) dans l'un quelconque des organes de crantage (13, 14, 15) bordant le couloir (12).

9. Mécanisme de commande selon la revendication 8, **caractérisé en ce qu'**un organe de limitation de course est agencé en barillet (9) le long duquel sont ménagés le couloir (12) et les organes de crantage (13, 14, 15) qui le bordent, les moyens d'introduction de la manette (9) dans l'un quelconque des organes de crantage étant constitués par un montage tournant du barillet (9) sur le boîtier (2), associé à des moyens (16,17) de durcissement élastique de son mouvement tournant.

10. Mécanisme de commande selon l'une quelconque des revendications précédentes, **caractérisé en ce que** l'une au moins des extrémités de l'axe de pivotement (7) participant de l'ensemble de manoeuvre est accessible depuis l'extérieur du boîtier (2), et est pourvu de moyens (25) d'assujettissement en rotation d'un potentiomètre (27), qui constitue l'organe de manoeuvre et qui est fixé sur la face extérieure correspondante du boîtier (2), pour permettre, à partir du mouvement tournant de l'axe de pivotement (7), une manoeuvre à commande continue d'un organe distant.

11. Mécanisme de commande selon l'une quelconque des revendications précédentes, **caractérisé en ce que**, l'ensemble de manoeuvre (3, 4, 7) étant équipé de moyens de rappel (8) en sa position extrême initiale à l'encontre de sa manoeuvre par l'opérateur, ces moyens de rappel sont constitués par un ressort à spirale (8) prenant appui à ses extrémités respectivement contre un becquet de la platine (4) et contre le boîtier (2).

## Claims

1. A continuous control mechanism for actuating at least one remote member, such as a mechanism comprising at least one actuating member (1, 27) for transmitting a command from a handle (3) to a remote member, said mechanism comprising an actuating assembly pivotingly mounted on a housing (2) between two end positions, said actuating assembly being composed at least of the handle (3) pivotingly articulated on the housing (2) via a fulcrum pin (7), with which the handle is integral, wherein the actuating member is a cable (1), wherein the handle (3) is integral with the fulcrum pin (7) via a plate (4) having two anchor points (5, 6) for fastening the cable (1); **characterized in that**:
the cable (1) is guided at the exit of the housing (2) inside a tube (19) with two reversible positions, and that the two anchor points (5, 6) of the cable (1) included in the plate (4) are disposed relatively to a corresponding position of the tube (19), said anchor points (5, 6) being situated at respective locations of the plate (4) being substantially diametrically opposed to the fulcrum pin (7) of the actuating assembly (3, 4, 7), in order to create, by a rotation of the actuating assembly (3, 4, 7) in the same direction, an actuation of the cable (1) along alternative reverse directions.

2. The control mechanism according to claim 1, **characterized in that** the tube (19) for guiding the cable is made on a bracket (20) comprising a couple of wings (21, 22) symmetrically oriented to the inside of the housing (2) for front fitting of the tube (19) against the edgewise walls of the housing (2).

3. The control mechanism according to any of the preceding claims, **characterized in that** a sealing strip (23), which is integral with the handle (3) at the basis thereof, slip-slidingly moves along the corresponding fitting wing (21, 22) of the tube (19) on the housing (2).

4. The control mechanism according to claim 2 or 3, **characterized in that** the bracket (20) forms the corresponding edgewise wall (18) of the housing (2).

5. The control mechanism according to any of claims 1 to 4, **characterized in that** the actuating assembly (3, 4, 7) is fitted with means for limiting the stroke thereof between the two end positions thereof, said means comprising at least one stopping member (13, 14, 15) against the rotation of the actuating assembly (3, 4, 7) and means (9, 16, 17) for immediate selection by the operator between an active position of said stopping member (13, 14, 15), in which the stroke of the rotation of the actuating assembly (3, 4, 7) is limited, and a retracted position, in which the actuating assembly (3, 4, 7) can be actuated by the operator between the two end positions thereof.

6. The control mechanism according to claim 5, **characterized in that** the selecting means are equally means for continuously selecting and means for discretely modifying the positions of the stopping member (13, 14, 15).

7. The control mechanism according to claim 5 or 6, **characterized in that** the means for limiting the stroke of the actuating assembly is a means for limiting the stroke against the rotation of the handle (3).

8. The control mechanism according to claim 7, **characterized in that** the stopping member (13, 14, 15), which is part of the means for limiting the stroke of the actuating assembly (13, 14, 15), comprises a channel (12) through which the handle (3) moves pivotingly, said channel (12) being lined on at least one of the sides thereof by notch members (13, 14, 15) for abutting the handle (3) respectively in the end positions thereof and in at least one intermediate stroke limiting position, wherein the selecting means comprises a means (9) for inserting the handle (3) into any of the notch members (13, 14, 15) lining the channel (12).

9. The control mechanism according to claim 8, **characterized in that** a stroke limiting member is arranged as a cylinder (9) along which are made the channel (12) and the notch members (13, 14, 15) which are lining it, wherein the means for inserting the handle (9) into any of the notch members is rotatingly mounting the cylinder (9) on the housing (2) together with means (16, 17) for elastic hardening the rotation thereof.

10. The control mechanism according to any of the preceding claims, **characterized in that** at least one of the ends of the fulcrum pin (7) being part of the actuating assembly is accessible from outside the housing (2), and is provided with a means (25) for rotatingly fixing a potentiometer (27), which is the actuating member and which is fastened to the corresponding outer face of the housing (2), in order to allow, by the rotation of the fulcrum pin (7), for continuous control actuation of a remote member.

11. The control mechanism according to any of the preceding claims, **characterized in that** with the actuating assembly (3, 4, 7) being provided with a means (8) for returning to the initial end position thereof against the actuation thereof by the operator, said return means are composed of a coiled spring (8) bearing at the ends thereof respectively on a boss of the plate (4) and on the housing (2).

## Patentansprüche

1. Kontinuierlicher Steuermechanismus zur Betätigung mindestens eines entfernten Elements, von der Art eines Mechanismus, der mindestens ein Betätigungselement (1, 27) zum Übertragen eines Befehls von einem Handgriff (3) an ein entferntes Element umfasst, wobei dieser Mechanismus eine Betätigungsanordnung umfasst, die zwischen zwei Endpositionen schwenkbar auf einem Gehäuse (2) gelagert ist, wobei diese Betätigungsanordnung mindestens aus dem Handgriff (3) besteht, der über einen damit einstückigen Schwenkbolzen (7) schwenkbar an dem Gehäuse (2) gelenkig ist, wobei das Betätigungselement ein Kabel (1) ist, wobei der Handgriff (3) mit dem Schwenkbolzen (7) über eine Platine (4) einstückig ist, die zwei Ankerpunkte (5, 6) zum Befestigen des Kabels (1) aufweist; **dadurch gekennzeichnet, dass**:
das Kabel (1) am Ausgang des Gehäuses (2) in einer Röhre (19) mit zwei umkehrbaren Positionen geführt wird, und dass die beiden Ankerpunkte (5, 6) des Kabels (1), welche die Platine (4) aufweist, relativ zu einer entsprechenden Position der Röhre (19) angeordnet sind, wobei sich diese Ankerpunkte (5, 6) an jeweiligen Stellen der Platine (4) befinden, die zum Schwenkbolzen (7) der Betätigungsanordnung (3, 4, 7) im Wesentlichen diametral entgegengesetzt sind, um durch ein Verschwenken der Betätigungsanordnung (3, 4, 7) in derselben Richtung eine Betätigung des Kabels (1) in alternative Gegenrichtungen zu bewirken.

2. Steuermechanismus nach Anspruch 1, **dadurch gekennzeichnet, dass** die Röhre (19) zum Führen des Kabels auf einer Halterung (20) eingerichtet ist, die ein Paar Flügel (21, 22) umfasst, die symmetrisch zum Innern des Gehäuses (2) ausgerichtet sind für ein frontales Einstecken der Röhre (19) gegen die senkrecht stehenden Wände des Gehäuses (2).

3. Steuermechanismus nach einem der vorhergehenden Ansprüche, **dadurch gekennzeichnet, dass** eine Dichtungslasche (23), die mit dem Handgriff (3) an seiner Basis einstückig ist, schiebend an dem entsprechenden Einsteckflügel (21, 22) der Röhre (19) auf dem Gehäuse (2) entlang gleitet.

4. Steuermechanismus nach Anspruch 2 oder 3, **dadurch gekennzeichnet, dass** die Halterung (20) die entsprechende senkrecht stehende Wand (18) des Gehäuses (2) bildet.

5. Steuermechanismus nach einem der Ansprüche 1 bis 4, **dadurch gekennzeichnet, dass** die Betätigungsanordnung (3, 4, 7) mit Mitteln ausgestattet ist, um ihren Weg zwischen ihren beiden Endpositionen zu begrenzen, wobei diese Mittel mindestens ein Anschlagselement (13, 14, 15) gegen das Verschwenken der Betätigungsanordnung (3, 4, 7) und Mittel (9, 16, 17) zur sofortigen Auswahl durch die Bedienperson zwischen einer aktiven Position dieses Anschlagselements (13, 14, 15), in welcher der Verschwenkweg der Betätigungsanordnung (3, 4, 7) begrenzt ist, und einer eingezogenen Position, in der die Betätigungsanordnung (3, 4, 7) durch die Bedienperson zwischen ihren beiden Endpositionen betätigt werden kann, umfassen.

6. Steuermechanismus nach Anspruch 5, **dadurch gekennzeichnet, dass** die Auswahlmittel gleichermaßen Mittel zum kontinuierlichen Auswählen und Mittel zum diskreten Ändern der Positionen des Anschlagselements (13, 14, 15) sind.

7. Steuermechanismus nach Anspruch 5 oder 6, **dadurch gekennzeichnet, dass** die Mittel zum Begrenzen des Wegs der Betätigungsanordnung Mittel zum Begrenzen des Wegs gegen das Verschwenken des Handgriffs (3) sind.

8. Steuermechanismus nach Anspruch 7, **dadurch gekennzeichnet, dass** das Anschlagselement (13, 14, 15), das Teil der Mittel zur Wegbegrenzung der Betätigungsanordnung (13, 14, 15) ist, einen Auslauf (12) umfasst, durch den der Handgriff (3) schwenkbar läuft, wobei dieser Auslauf (12) auf mindestens einer seiner Seiten von Rastelementen (13, 14, 15) umrandet ist, um den Handgriff (3) jeweils in seinen Endpositionen und in mindestens einer wegbegrenzenden Zwischenposition in Anschlag zu bringen, wobei die Auswahlmittel Mittel (9) zum Einführen des Handgriffs (3) in eines der Rastelemente (13, 14, 15), die den Auslauf (12) umranden, umfassen.

9. Steuermechanismus nach Anspruch 8, **dadurch gekennzeichnet, dass** ein wegbegrenzendes Element als Zylinder (9) angeordnet ist, an dem der Auslauf (12) und die Rastelemente (13, 14, 15), die diesen umranden, ausgebildet sind, wobei die Mittel zum Einführen des Handgriffs (9) in eines der Rastelemente das drehbare Anbringen des Zylinders (9) auf dem Gehäuse (2) zusammen mit Mitteln (16, 17) zum elastischen Erschweren seiner Drehbewegung sind.

10. Steuermechanismus nach einem der vorhergehenden Ansprüche, **dadurch gekennzeichnet, dass** mindestens eines der Enden des Schwenkbolzens (7), der Teil der Betätigungsanordnung ist, von der Außenseite des Gehäuses (2) aus zugänglich ist und mit Mitteln (25) versehen ist zum schwenkbaren Festklammern eines Potentiometers (27), welches das Betätigungselement ist und das an der entsprechenden Außenseite des Gehäuses (2) befestigt ist, um ausgehend von der Drehbewegung des Schwenkbolzens (7) eine kontinuierliche Steuerbetätigung eines entfernten Elements zu ermöglichen.

11. Steuermechanismus nach einem der vorhergehenden Ansprüche, **dadurch gekennzeichnet, dass**, da die Betätigungsanordnung (3, 4, 7) mit Mitteln (8) versehen ist zum Rückstellen in ihre ursprüngliche Endposition gegen ihre Betätigung durch die Bedienperson, diese Rückstellmittel aus einer Spiralfeder bestehen (8), die sich an ihren Enden jeweils auf einem Vorsprung der Platine (4) und auf dem Gehäuse (2) abstützt.
